# EUROPEAN PATENT SPECIFICATION

(11) **EP 3 505 870 B1**
(45) Date of publication and mention of the grant of the patent: **25.09.2024**
(21) Application number: 18164417.0
(22) Date of filing: 27.03.2018
(51) Int. Cl.: G01C 21/34, G05D 1/43, B60W 30/12

(54) **METHOD AND SYSTEM FOR GENERATING A SAFE NAVIGATION PATH FOR A VEHICLE**
VERFAHREN UND SYSTEM ZUR ERZEUGUNG EINES SICHEREN NAVIGATIONSWEGES FÜR EIN FAHRZEUG
PROCÉDÉ ET SYSTÈME POUR GÉNÉRER UN TRAJET DE NAVIGATION SANS DANGER POUR VÉHICULE

(30) Priority: 28.12.2017 IN 201741047114
(43) Date of publication of application: 03.07.2019
(73) Proprietor: Wipro Limited, 560 035 Karnataka (IN)
(72) Inventor: KUMAR, Balaji Sunil, 560102 Bengaluru (IN); SARKAR, Manas, 700127 Kolkata (IN)
(74) Representative: Finnegan Europe LLP

(56) References cited:
- US-A1- 2015 345 959
- GU TIANYU ET AL: "Focused Trajectory Planning for autonomous on-road driving", 2013 IEEE INTELLIGENT VEHICLES SYMPOSIUM (IV), IEEE, 23 June 2013 (2013-06-23), pages 547 - 552, XP032502044, ISSN: 1931-0587, [retrieved on 20131010], DOI: 10.1109/IVS.2013.6629524
- HOUENOU ADAM ET AL: "Vehicle trajectory prediction based on motion model and maneuver recognition", 2013 IEEE/RSJ INTERNATIONAL CONFERENCE ON INTELLIGENT ROBOTS AND SYSTEMS, IEEE, 3 November 2013 (2013-11-03), pages 4363 - 4369, XP032537623, ISSN: 2153-0858, [retrieved on 20131227], DOI: 10.1109/IROS.2013.6696982

## Description

### Technical Field

The present subject matter relates generally to field of telematics, and more particularly, but not exclusively to a method and a system for generating a safe navigation path for navigating a vehicle in the field of telematics.

### Background

Generally, vehicles make use of navigation path for navigating from a source point to a destination point. Nowadays, the navigation path is widely used for navigating vehicles, for example, autonomous vehicles in different application areas. Autonomous vehicles are the vehicles that are capable of sensing environment around them for moving on the road without any human intervention. The autonomous vehicles sense the environment with the help of sensors configured in the autonomous vehicles such as Laser, Light Detection and Ranging (LIDAR), Global Positioning System (GPS), computer vision and the like.

The existing techniques related to generation of the navigation path may utilize various mechanisms such as "Travel Route Generation considering Vehicle Constraint while vehicle is moving", "Simulation based Vehicle Path Detection", "Lane Estimation using Camera and LIDAR", "Path detection using camera on vehicle", and the like. However, the existing techniques may generate the navigation path that may navigate the vehicle close to boundaries of the road or close to obstacle positions. The existing techniques may not consider free space present around the vehicle while generating the navigation path which leads to generation of the navigation path which is close to the boundaries or the obstacles. Due to the generation of such navigation paths close to the boundaries, the vehicles may experience situations where the vehicles may not have enough space for free movement in places such as curves, U-turns and the like. Further, the vehicle may experience frequent jerks while moving along the navigation path which is generated close to the boundaries or the obstacles.

US 2015/345959 discloses vehicle trajectory optimization for autonomous vehicles.

Gu Tianyu et al: "Focused Trajectory Planning for autonomous on-road driving", 2013 IEEE Intelligent Vehicles Symposium (IV), IEEE, 23 June 2013 (2013-06-23), pages 547-552, discloses use of dense lattice sampling and optimization techniques to generate a reference trajectory accounting for road geometry, obstacles and high-level directives.

Therefore, the existing techniques may generate the navigation path for navigating the vehicles along the generated path, but, may not generate the navigation path that ensures smooth navigation and free movement of the vehicles on the road.

### Summary

One or more shortcomings of the prior art may be overcome, and additional advantages may be provided through the present disclosure. Additional features and advantages may be realized through the techniques of the present disclosure. Other embodiments and aspects of the disclosure are described in detail herein and are considered a part of the claimed disclosure.

In a first aspect, the present invention provides a method for generating a safe navigation path for navigating a vehicle according to claim 1.

In a second aspect, the present invention provides a path generation system for generating a safe navigation path for navigating a vehicle according to claim 5.

In a third aspect, the present invention provides a non-transitory computer readable medium according to claim 9.

The foregoing summary is illustrative only and is not intended to be in any way limiting. In addition to the illustrative aspects, embodiments, and features described above, further aspects, embodiments, and features will become apparent by reference to the drawings and the following detailed description.

### Brief Description of the Accompanying Diagrams

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
**FIG.1A** shows an exemplary architecture for generating a safe navigation path for navigating a vehicle in accordance with some embodiments of the present disclosure;
**FIG.1B** shows an exemplary depiction of a reference path in accordance with some embodiments of the present disclosure;
**FIG.2A** shows a detailed block diagram of a path generation system for generating a safe navigation path for navigating a vehicle in accordance with some embodiments of the present disclosure;
FIG.2B (1) and FIG.2B (2) show exemplary representations of boundary points along a boundary of the reference path in accordance with some embodiments of the present disclosure;

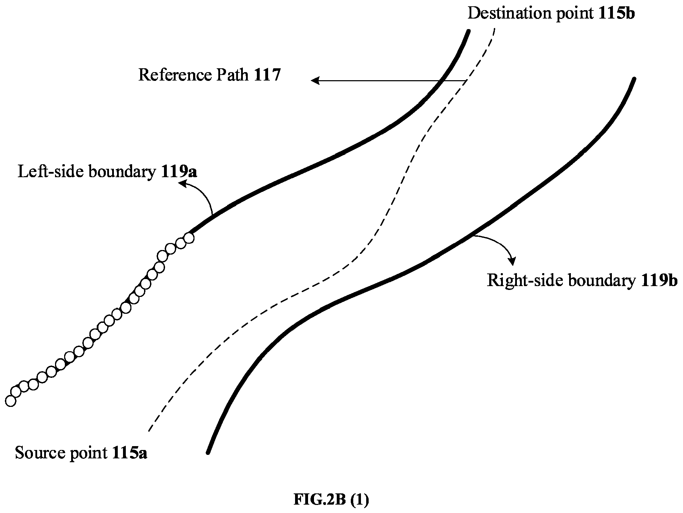

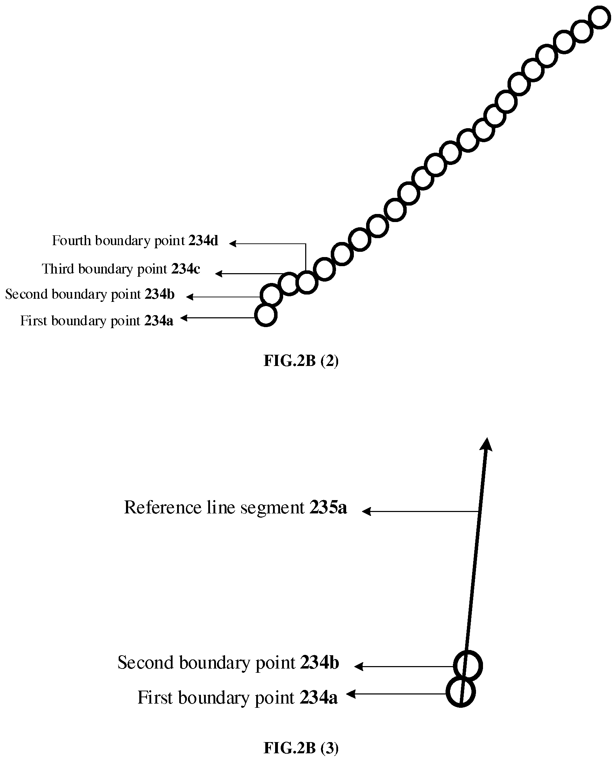

FIG.2B (3) shows an exemplary reference line segment in accordance with some embodiments of the present disclosure;

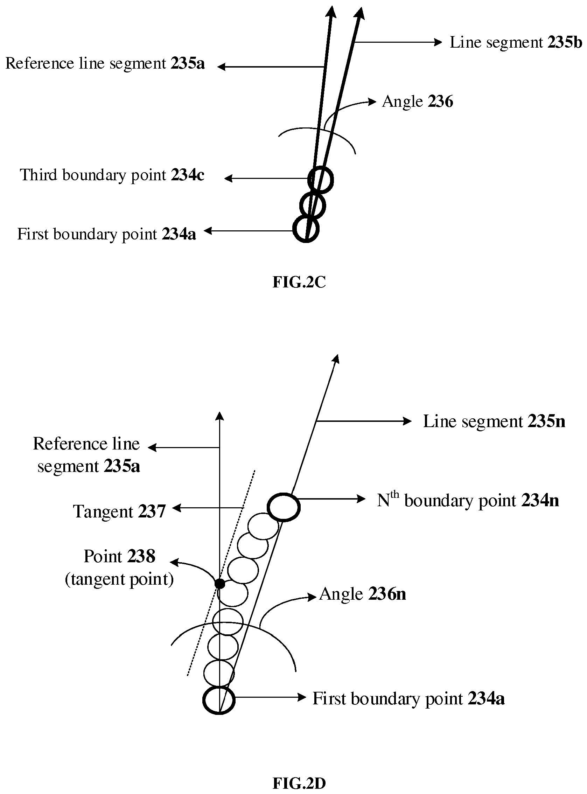

**FIG.2C** and **FIG.2D** shows an exemplary line segment between two boundary points in accordance with some embodiments of the present disclosure;

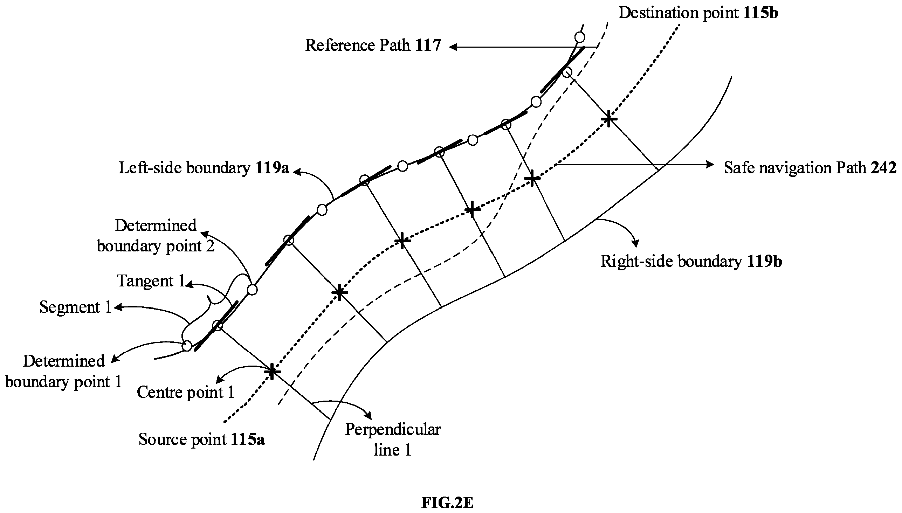

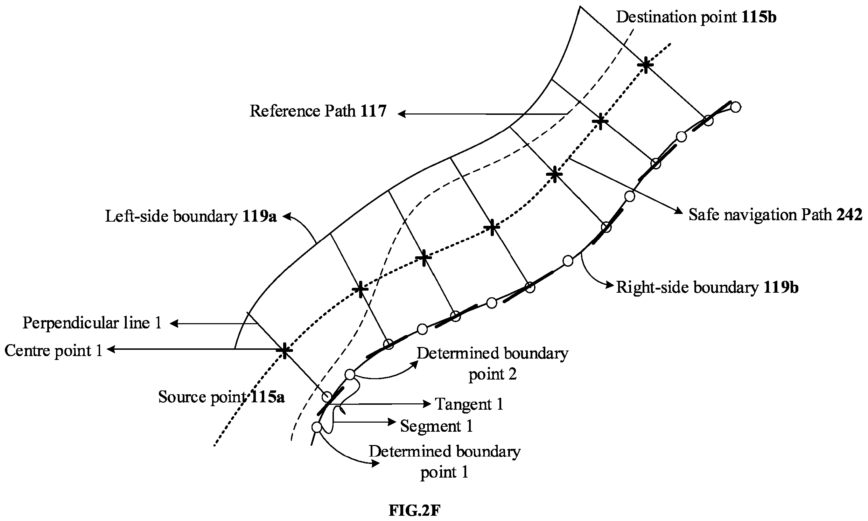

**FIG.2E** and **FIG.2F** show an exemplary representation of a safe navigation path in accordance with some embodiments of the present disclosure;

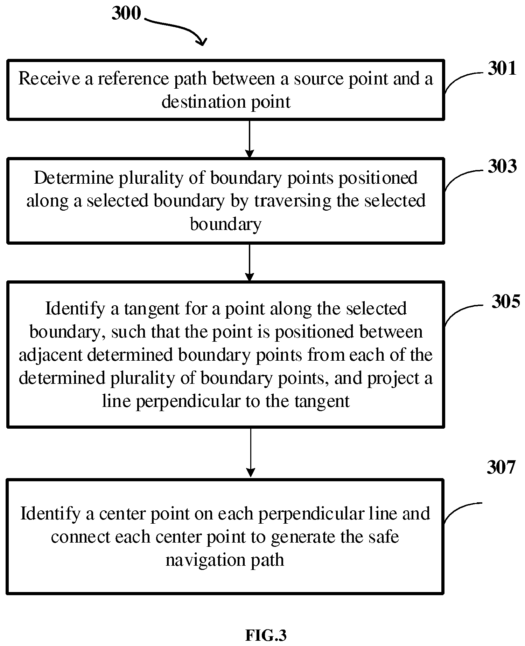

**FIG.3** shows a flowchart illustrating a method of generating a safe navigation path for navigating a vehicle in accordance with some embodiments of the present disclosure; and

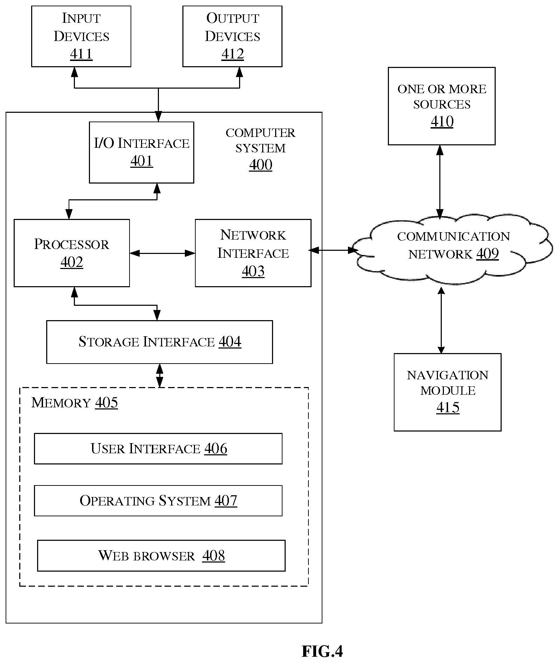

**FIG.4** is a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### Detailed Description

While the disclosure is susceptible to various modifications and alternative forms, specific embodiment thereof has been shown by way of example in the drawings and will be described in detail below. It should be understood, however that it is not intended to limit the disclosure to the forms disclosed, the scope of the present invention being defined by the appended claims.

Disclosed herein are a method and a system for generating a safe navigation path for navigating a vehicle. A path generation system associated with the vehicle, may receive a reference path between a source point and a destination point from one or more sources. As an example, the one or more sources may include, but not limited to, an application related to maps such as a navigation application and a database storing static maps. The reference path may be confined between boundaries of a road characterised as a left-side boundary and a right-side boundary. Further, the path generation system may select one boundary from the left-side boundary and the right-side boundary. Upon selecting the boundary, the path generation system may determine a plurality of boundary points along the selected boundary by traversing the selected boundary. According to the invention, the plurality of boundary points are determined based on generation of one or more segments along the selected boundary. Each of the one or more segments includes one of the plurality of boundary points. Further, the path generation system identifies a tangent for a point along the selected boundary. The point is positioned between adjacent determined boundary points from each of the determined plurality of boundary points. Furthermore, the path generation system projects a line perpendicular to the tangent from each of the plurality of boundary points until the perpendicular line reaches other boundary. Finally, the path generation system identifies a centre point on each perpendicular line and connects each centre point identified on each perpendicular line to generate the safe navigation path. The safe navigation path generated in the present disclosure is at centre of the road. Therefore, the safe navigation path may provide sufficient space for manoeuvring the vehicle, thereby overcoming the constraints related to vehicle length, vehicle width, turning radius and the like. Also, the safe navigation path generated in the present disclosure provides a smooth navigation for the vehicle by minimizing jerks while driving the vehicle.

A description of an embodiment with several components in communication with each other does not imply that all such components are required. On the contrary a variety of optional components are described to illustrate the wide variety of possible embodiments of the disclosure.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present invention as defined by the appended claims. The following description is, therefore, not to be taken in a limiting sense.

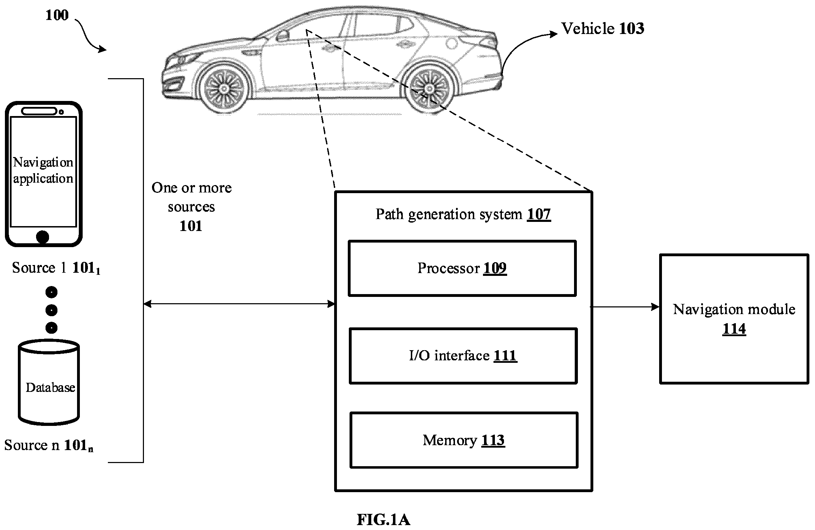

**FIG.1A** shows an exemplary architecture for generating a safe navigation path for navigating a vehicle in accordance with some embodiments of the present disclosure.

The architecture **100** includes one or more sources, source **101₁** to source **101ₙ** (collectively referred as one or more sources **101),** a vehicle **103,** a path generation system **107** and a navigation module **114.** As an example, the one or more sources **101** may include, but not limited to, an application related to maps such as a navigation application and a database storing static maps. In some embodiments, the one or more sources **101** may provide static maps generated using Light Detection and Ranging (LIDAR). In some embodiments, the one or more sources **101** may be associated with the path generation system **107** via a communication network (not shown in **FIG.1A****).** As an example, the communication network may include a wired communication network or a wireless communication network. In some embodiments, the path generation system **107** may be configured within the vehicle **103** as shown in the **FIG.1A****.** In some other embodiments, the path generation system **107** may be remotely associated with the vehicle **103** via the wireless communication network. In some embodiments, the vehicle **103** may be an autonomous vehicle or a non-autonomous vehicle. As an example, the vehicle **103** may be a bike, a car, a truck, a bus and the like.

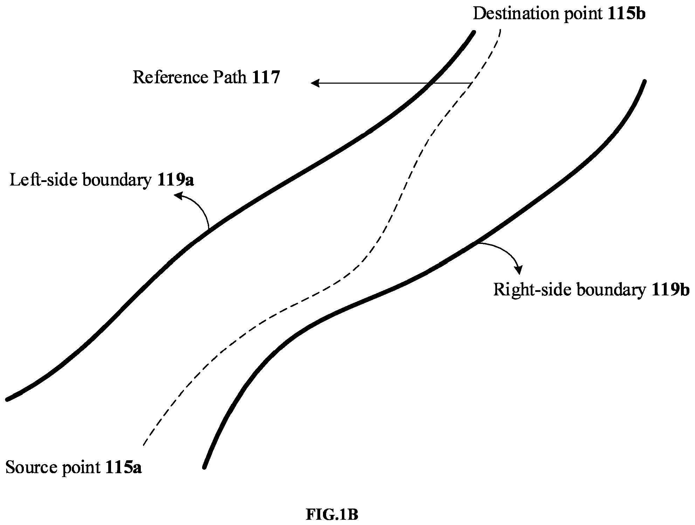

The path generation system **107** includes a processor **109,** an Input/Output (I/O) interface **111** and a memory **113.** The I/O interface **111** may be configured to receive a reference path **117** between a source point **115a** and a destination point **115b,** from the one or more sources **101**. According to the invention, the reference path **117** is confined between boundaries of a road characterized as a left-side boundary **119a** and a right-side boundary **119b** as shown in the **FIG.1B****.** The one or more sources **101** may obtain the reference path **117** using one or more predefined standard techniques such as Dijkstra's algorithm, A-star algorithm and the like, upon receiving the source point **115a** and the destination point **115b.** In some embodiments, the source point **115a** and the destination point **115b** may be provided as inputs to the path generation system **107** by a user associated with the path generation system **107.** Further, the processor **109** may store the reference path **117** in the memory **113** coupled with the processor **109.** Upon receiving the reference path **117,** the processor **109** selects a boundary from the left-side boundary **119a** and the right-side boundary **119b.** Further, the processor **109** determines a plurality of boundary points positioned along the selected boundary by traversing the selected boundary. Upon determining the plurality of boundary points, the processor **109** identifies a tangent for a point along the selected boundary. The point is positioned between adjacent determined boundary points from each of the determined plurality of boundary points. Further, the processor **109** projects a line perpendicular to the tangent from each of the plurality of boundary points until the perpendicular line reaches other boundary. In some embodiments, the other boundary may be defined as one among the left-side boundary **119a** and the right-side boundary **119b** which may not be initially selected by the processor **109** for determining the plurality of boundary points. Upon projecting the perpendicular line from each of the plurality of boundary points, the processor **109** identifies a centre point on each perpendicular line.

Finally, the processor **109** connects each centre point identified on each perpendicular line to generate a safe navigation path for navigating the vehicle **103.** In some embodiments, the processor **109** may use one or more predefined curve fitting techniques to connect each centre point on each perpendicular line. Upon generating the safe navigation path, the processor **109** may provide the generated safe navigation path to a navigation module **114** associated with the path generation system **107** for navigating the vehicle **103.** In some embodiments, the navigation module **114** may be configured in the vehicle **103.** The navigation module **114** may determine a command velocity for the vehicle **103** based on dynamic data received for navigating the vehicle **103** on the road. In some embodiments, the navigation module **114** may re-plan the generated safe navigation path or deviate from the generated safe navigation path when the vehicle **103** may be anticipated to encounter one or more obstacles on the road.

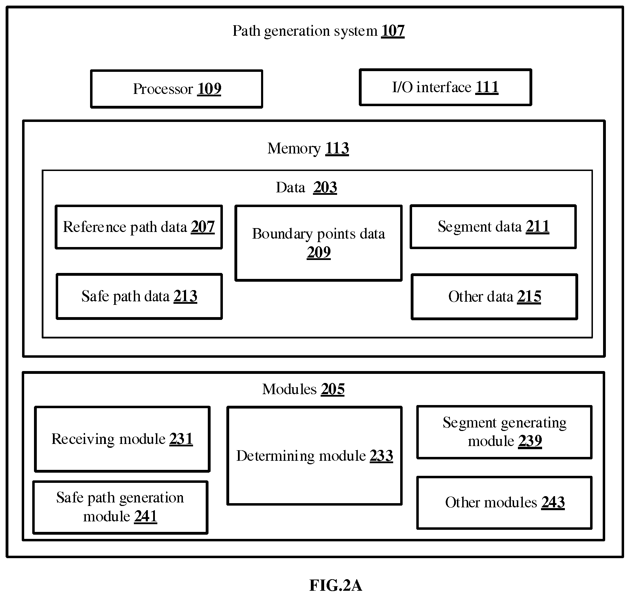

**FIG.2A** shows a detailed block diagram of a path generation system for generating a safe navigation path for navigating a vehicle in accordance with some embodiments of the present disclosure.

In some implementations, the path generation system **107** may include data **203** and modules **205.** As an example, the data **203** is stored in a memory **113** configured in the path generation system **107** as shown in the **FIG.2A****.** In one embodiment, the data **203** may include a reference path data **207,** boundary points data **209,** a segment data **211,** a safe path data **213** and other data **215.** In the illustrated **FIG.2A****,** modules **205** are described herein in detail.

In some embodiments, the data **203** may be stored in the memory **113** in form of various data structures. Additionally, the data **203** can be organized using data models, such as relational or hierarchical data models. The other data **215** may store data, including temporary data and temporary files, generated by the modules **205** for performing the various functions of the path generation system **107.**

In some embodiments, the data **203** stored in the memory **113** may be processed by the modules **205** of the path generation system **107.** The modules **205** may be stored within the memory **113.** In an example, the modules **205** communicatively coupled to the processor **109** configured in the path generation system **107,** may also be present outside the memory **113** as shown in **FIG.2A** and implemented as hardware. As used herein, the term modules may refer to an application specific integrated circuit (ASIC), an electronic circuit, a processor (shared, dedicated, or group) and memory that execute one or more software or firmware programs, a combinational logic circuit, and/or other suitable components that provide the described functionality.

In some embodiments, the modules **205** may include, for example, a receiving module **231,** a determining module **233,** a segment generating module **239,** a safe path generation module **241** and other modules **243.** The other modules **243** may be used to perform various miscellaneous functionalities of the path generation system **107.** It will be appreciated that such aforementioned modules **205** may be represented as a single module or a combination of different modules.

In some embodiments, the receiving module **231** may receive a reference path **117** between a source point **115a** and a destination point **115b,** from one or more sources **101** when the vehicle **103** is yet to start journey from the source point **115a** to the destination point **115b.** According to the invention, the reference path **117** is confined between boundaries of a road characterized as a left-side boundary **119a** and a right-side boundary **119b.** The reference path **117** along with the source point **115a** and a destination point **115b** may be stored as the reference path data **207.** Further, as an example, the one or more sources **101** may include, but not limited to, an application related to maps such as a navigation application and a database storing static maps. In some embodiments, the one or more sources 101 may provide static maps generated using Light Detection and Ranging (LIDAR).

According to the invention, the determining module **233** determines a plurality of boundary points positioned along a boundary selected from the left-side boundary **119a** and the right-side boundary **119b.** The determining module **233** determines the plurality of boundary points based on generation of one or more segments by traversal of the selected boundary. The plurality of boundary points maybe stored as the boundary points data **209.** The one or more segments may be stored as the segment data **211.** In some embodiments, each segment of the one or more segments may comply with at least one of the pre-defined segment length threshold and the pre-defined segment inclination threshold. According to the invention, each of the one or more segments includes a proposed boundary point which is detected to be a determined boundary point, when the segment complies with at least the pre-defined segment length threshold and the pre-defined segment inclination threshold. In some embodiments, the method of determining the plurality of boundary points based on the generation of the one or more segments is explained below using exemplary values for better understanding. However, the exemplary values should not be considered as a limitation for the present disclosure.

According to the invention, to determine the plurality of boundary points, the determining module **233** selects the boundary from the left-side boundary **119a** and the right-side boundary **119b.** As an example, consider that the determining module **233** selected the left-side boundary **119a** for determining the plurality of boundary points. Therefore, the right-side boundary **119b** may be defined as other boundary relative to the selected boundary.

The determining module **233** may visualize the selected boundary as a continuous accumulation of boundary points as shown in the FIG.2B (1). Further, a zoomed view of the selected boundary accumulated with the boundary points such as a first boundary point **234a,** a second boundary point **234b,** a third boundary point **234c** and the like is as shown in the FIG.2B (2). Further, the determining module **233** identifies a line segment between the first boundary point **234a** and the second boundary point **234b** as a reference line segment **235a** as shown in the FIG.2B (3). Upon identifying the reference line segment **235a,** the determining module **233** traverses along the selected boundary, one boundary point at a given point of time. According to the invention, each boundary point that the determining module **233** traverses is considered to be a proposed boundary point, until the determined boundary point is detected. As an example, consider that the determining module **233** is about to traverse the third boundary point **234c.** Therefore, the third boundary point **234c** would be considered as the proposed boundary point for the current traversal. Similarly, for the next traversal, a fourth boundary point **234d** would be considered as the proposed boundary point.

As an example, consider the third boundary point **234c** as the proposed boundary point. The determining module **233** may draw a line segment **235b** between the first boundary point **234a** and the third boundary point **234c** as shown in the **FIG.2C****.** Upon drawing the line segment **235b,** the determining module **233** determines an angle **236** between the reference line segment **235a** and the line segment **235b.** Upon determining the angle **236,** the determining module **233** compares the angle **236** with a pre-defined segment inclination threshold. As an example, consider that the pre-defined segment inclination threshold is 10 degrees. Based on the comparison, if the angle **236** is determined to be greater than the pre-defined segment inclination threshold, the segment generating module **239** may generate a segment at the third boundary point **234c.** The third boundary point **234c** at which the segment is generated, may be the determined boundary point of the segment. In some embodiments, the determined boundary point is obtained at an intersection of the selected boundary and the generated segment. Based on the comparison, if the angle **236** is determined to be less than the pre-defined segment inclination threshold, the determining module **233** may proceed to next traversal by selecting the fourth boundary point **234d** as the proposed boundary point. Upon selecting the fourth boundary point **234d,** the determining module **233** may re-iterate the method explained above. The determining module **233** re-iterates the above-mentioned method by traversing the proposed boundary points one after the other until one of the proposed boundary points exceeds the pre-defined segment inclination threshold.

As an example, consider the values determined by the determining module **233** as shown in the below **Table 1.**

**Table 1**

| **Traversal No.** | **Boundary point considered as proposed boundary point** | **Predefined segment inclination threshold (in degrees)** | **Determined angle between reference line segment and current line segment (in degrees)** | **Threshold exceeded** |
|---|---|---|---|---|
| 1 | 1^{st} boundary point | 10 | 5 | No |
| 2 | 2^{nd} boundary point | 10 | 7 | No |
| 3 | 3^{rd} boundary point | 10 | 8 | No |
| 4 | 4^{th} boundary point | 10 | 10.5 | Yes |

Therefore, according to the above **Table 1,** the fourth boundary point **234d** exceeds the pre-defined segment inclination threshold. Therefore, the segment generating module **239** may generate the segment at the fourth boundary point **234d,** thereby obtaining the determined boundary point of the segment, which is considered as one of the determined plurality of boundary points along the selected boundary.

In some embodiments, the determining module **233** may re-iterate the above-mentioned method until one of the boundary points exceeds the pre-defined segment length threshold. Further, the segment generating module **239** may generate the segment at the boundary point where the pre-defined segment threshold length is exceeded. In this scenario, though the one of the boundary points may not have exceeded the pre-defined segment inclination threshold, the segment generating module **239** may still generate the segment since the one of the boundary point exceeded the pre-defined segment length threshold. As an example, consider that the pre-defined segment length threshold is 5 metres. Consider that the number of boundary points traversed by the determining module **233** may correspond to the pre-defined segment length threshold "5 metres". However, in an example not falling under the scope of the present invention, the boundary point which exceeded the pre-defined segment length threshold, may not be exceeding the predefined segment inclination threshold. In such a scenario, the segment generating module **239** may generate the segment at the boundary point where the pre-defined segment length threshold was exceeded, since the boundary point is complying with at least one of the pre-defined segment length threshold and the pre-defined segment inclination threshold. Therefore, the boundary point at which the segment is generated, may be the determined boundary point of the segment.

In some embodiments, each segment generated by the segment generating module **239** may include the proposed boundary point that may change for every successive traversal until the segment generating module **239** generates the segment, thereby detecting the determined boundary point for the segment at the intersection of the selected boundary and the generated segment. Therefore, the plurality of boundary points may be determined by the determining module **233** based on the generation of one or more segments by the segment generating module **239.** Further, the determining module **233** may determine the plurality of boundary points and the segment generating module **239** may generate one or more segments corresponding to each of the determined plurality of boundary points till the end of the reference path **117.**

In some embodiments, a line segment between the determined boundary point of the generated segment and a successive boundary point may be considered as a next reference line segment for generating a next segment along the selected boundary, until the end of the reference path **117**.

According to the invention, upon determining the plurality of boundary points and upon generating the one or more segments along the selected boundary, the safe path generation module **241** identifies a tangent for a point (also referred to as a tangent point) along the selected boundary. The tangent point **238** is positioned between adjacent determined boundary points from each of the determined plurality of boundary points as shown in the **FIG.2D****.** In the **FIG.2D****,** consider that the boundary point represented as **234a** is the first boundary point and the boundary point represented as **234n** is a "n^{th}" boundary point on the selected boundary. For the current traversal, the determining module **233** may consider the "n^{th}" boundary point **234n** along the selected boundary, as the proposed boundary point. Further, the **FIG.2D** represents the reference line segment **235a,** and a line segment **235n** between the first boundary point **234a** and the "n^{th}" boundary point **234n,** to determine an angle **236n.** Furthermore, consider that the angle **236n** between the reference line segment **235a** and the line segment **235n** exceeded the pre-defined segment inclination threshold. Therefore, the determining module **233** may detect the proposed boundary point i.e. the "n^{th}" boundary point **234n,** as the determined boundary point, where the segment generating module **239** may generate the segment, since the segment complies with at least the pre-defined segment length threshold and the pre-defined segment inclination threshold. Also, the first boundary point **234a** and the "n^{th}" boundary point **234n** may be considered as the adjacent determined boundary points. Further, the safe path generation module **241** identifies the tangent for a point between the adjacent determined boundary points, **234a** and **234n.** To identify the tangent, the safe path generation module **241** may project a line, touching the selected boundary, parallel to the line segment **235n** as shown in the **FIG.2D****.** In some embodiments, the safe path generation module **241** may identify the line projected parallel to the line segment **235n** as the tangent **237** to the selected boundary that touches the selected boundary at the point (tangent point) **238** positioned between the adjacent determined boundary points, **234a** and **234n,** as shown in the **FIG.2D****.** Similarly, the safe path generation module **241** may generate the tangents between each of the adjacent determined boundary points as shown in the **FIG.2E****.**

As an example, as shown in the **FIG.2E****,** tangent 1 may be the tangent identified between the adjacent determined boundary points 1 and 2, for the generated segment 1. In the **FIG.2E****,** the generated segment 1 may be the area between the adjacent determined boundary points 1 and 2. Further, the safe path generation module **241** projects a line perpendicular to the tangent from each of the determined plurality of boundary points until the perpendicular line reaches the other boundary as shown in the **FIG.2E****.** Furthermore, the safe path generation module **241** identifies a centre point on each perpendicular line corresponding to each of the determined plurality of boundary points as shown in the **FIG.2E****.** As an example, as shown in the **FIG.2E****,** perpendicular line 1 may be projected from tangent 1 on the left-side boundary **119a** till the right-side boundary **119b.** Further, a centre point 1 may be identified on the perpendicular line 1 of the segment 1. Upon identifying the centre point, the safe path generation module **241** may connect each centre point identified on each perpendicular line using one or more predefined curve fitting techniques, to generate the safe navigation path **242** as shown in the **FIG.2E****.** The generated safe navigation path maybe stored as the safe path data **213.** Upon generating the safe navigation path **242,** the safe path generation module **241** may provide the generated safe navigation path **242** to a navigation module **114** associated with the path generation system **107** for navigating the vehicle **103.** In some embodiments, the navigation module **114** may be configured in the vehicle **103.** The navigation module **114** may determine a command velocity for the vehicle **103** based on dynamic data received for navigating the vehicle **103** on the road. As an example, the dynamic data may include, but not limited to, data related to one or more obstacles appearing in real-time when the vehicle **103** is navigating along the safe navigation path **242** and data related to terrain associated with the safe navigation path **242.** In some embodiments, the navigation module **114** may re-plan the generated safe navigation path **242** or deviate from the generated safe navigation path **242** when the vehicle **103** may be anticipated to encounter the one or more obstacles on the road.

In some embodiments, the safe navigation path **242** may be generated by selecting the right-side boundary **119b** as shown in the **FIG.2F****,** using the same method as explained above for generating the safe navigation path **242** by selecting the left-side boundary **119a.**

**FIG.3** shows a flowchart illustrating a method of generating a safe navigation path for navigating a vehicle in accordance with some embodiments of the present disclosure.

As illustrated in **FIG.3****,** the method **300** includes one or more blocks illustrating a method of generating a safe navigation path for navigating a vehicle **103.** The method **300** may be described in the general context of computer executable instructions. Generally, computer executable instructions can include routines, programs, objects, components, data structures, procedures, modules, and functions, which perform functions or implement abstract data types.

The order in which the method **300** is described is not intended to be construed as a limitation, the scope of the present invention being defined by the appended claims. Furthermore, the method **300** can be implemented in any suitable hardware, software, firmware, or combination thereof.

At **block 301,** the method **300** includes receiving, by a processor **109** of the path generation system **107,** a reference path **117** between a source point **115a** and a destination point **115b** from one or more sources **101.** The reference path **117** is confined between boundaries of a road characterised as a left-side boundary **119a** and a right-side boundary **119b.** The one or more sources **101** may obtain the reference path **117** using one or more predefined standard techniques such as Dijkstra's algorithm, A-star algorithm and the like, upon receiving the source point **115a** and the destination point **115b.**

At **block 303,** the method **300** includes determining, by the processor **109,** a plurality of boundary points positioned along a boundary selected from the left-side boundary **119a** and the right-side boundary **119b** by traversing the selected boundary. According to the invention, the plurality of boundary points may be determined based on generation of one or more segments by traversal of the selected boundary. Each of the generated one or more segments complies with at least a pre-defined segment inclination threshold, and optionally with a pre-defined segment length threshold.

At **block 305,** the method **300** includes, identifying, by the processor **109,** a tangent for a point along the selected boundary. The point is positioned between adjacent determined boundary points from each of the determined plurality of boundary points. Upon determining the tangent, the processor **109** projects a line perpendicular to the tangent from each of the plurality of boundary points until the perpendicular line reaches other boundary.

At **block 307,** the method **300** includes, identifying, by the processor **109,** a centre point on each perpendicular line. Each centre point identified on each perpendicular line is connected using one or more predefined curve fitting techniques to generate the safe navigation path **242** for navigating the vehicle **103.**

**FIG.4** is a block diagram of an exemplary computer system for implementing embodiments consistent with the present disclosure.

In some embodiments, **FIG.4** illustrates a block diagram of an exemplary computer system **400** for implementing embodiments consistent with the present invention. In some embodiments, the computer system **400** can be path generation system **107** that is used for generating a safe navigation path for navigating a vehicle **103.** The computer system **400** may include a central processing unit ("CPU" or "processor") **402.** The processor **402** may include at least one data processor for executing program components for executing user or system-generated business processes. A user may include a person, a person using a device such as such as those included in this invention, or such a device itself. The processor **402** may include specialized processing units such as integrated system (bus) controllers, memory management control units, floating point units, graphics processing units, digital signal processing units, etc.

The processor **402** may be disposed in communication with input devices **411** and output devices **412** via I/O interface **401.** The I/O interface **401** may employ communication protocols/methods such as, without limitation, audio, analog, digital, stereo, IEEE-1394, serial bus, Universal Serial Bus (USB), infrared, PS/2, BNC, coaxial, component, composite, Digital Visual Interface (DVI), high-definition multimedia interface (HDMI), Radio Frequency (RF) antennas, S-Video, Video Graphics Array (VGA), IEEE 802.n /b/g/n/x, Bluetooth, cellular (e.g., Code-Division Multiple Access (CDMA), High-Speed Packet Access (HSPA+), Global System For Mobile Communications (GSM), Long-Term Evolution (LTE), WiMax, or the like), etc.

Using the I/O interface **401,** computer system **400** may communicate with input devices **411** and output devices **412.**

In some embodiments, the processor **402** may be disposed in communication with a communication network **409** via a network interface **403.** The network interface **403** may communicate with the communication network **409.** The network interface **403** may employ connection protocols including, without limitation, direct connect, Ethernet (e.g., twisted pair 10/100/1000 Base T), Transmission Control Protocol/Internet Protocol (TCP/IP), token ring, IEEE 802.11a/b/g/n/x, etc. Using the network interface **403** and the communication network **409,** the computer system **400** may communicate with one or more sources **410** (**410ₐ** up to **410ₙ**), and a navigation module **415.** The communication network **409** can be implemented as one of the different types of networks, such as intranet or Local Area Network (LAN), Closed Area Network (CAN) and such within the vehicle. The communication network **409** may either be a dedicated network or a shared network, which represents an association of the different types of networks that use a variety of protocols, for example, Hypertext Transfer Protocol (HTTP), CAN Protocol, Transmission Control Protocol/Internet Protocol (TCP/IP), Wireless Application Protocol (WAP), etc., to communicate with each other. Further, the communication network **409** may include a variety of network devices, including routers, bridges, servers, computing devices, storage devices, etc. The one or more sources **410** may include, but not limited to, a navigation application, an application related to maps and a database comprising static maps. In some embodiments, the processor **402** may be disposed in communication with a memory **405** (e.g., RAM, ROM, etc. not shown in **FIG.4****)** via a storage interface **404.** The storage interface **404** may connect to memory **405** including, without limitation, memory drives, removable disc drives, etc., employing connection protocols such as Serial Advanced Technology Attachment (SATA), Integrated Drive Electronics (IDE), IEEE-1394, Universal Serial Bus (USB), fibre channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory **405** may store a collection of program or database components, including, without limitation, a user interface **406,** an operating system **407,** a web browser **408** etc. In some embodiments, the computer system **400** may store user/application data, such as the data, variables, records, etc. as described in this invention. Such databases may be implemented as fault-tolerant, relational, scalable, secure databases such as Oracle or Sybase.

The operating system **407** may facilitate resource management and operation of the computer system **400.** Examples of operating systems include, without limitation, Apple Macintosh OS X, UNIX, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), International Business Machines (IBM) OS/2, Microsoft Windows (XP, Vistal7/8, etc.), Apple iOS, Google Android, Blackberry Operating System (OS), or the like. The User interface **406** may facilitate display, execution, interaction, manipulation, or operation of program components through textual or graphical facilities. For example, user interfaces may provide computer interaction interface elements on a display system operatively connected to the computer system **400,** such as cursors, icons, check boxes, menus, scrollers, windows, widgets, etc. Graphical User Interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system **400** may implement the web browser **408** stored program components. The web browser **408** may be a hypertext viewing application, such as Microsoft Internet Explorer, Google Chrome, Mozilla Firefox, Apple Safari, etc. Secure web browsing may be provided using Secure Hypertext Transport Protocol (HTTPS) secure sockets layer (SSL), Transport Layer Security (TLS), etc. Web browsers may utilize facilities such as AJAX, DHTML, Adobe Flash, JavaScript, Java, Application Programming Interfaces (APIs), etc. In some embodiments, the computer system **400** may implement a mail server stored program component. The mail server may be an Internet mail server such as Microsoft Exchange, or the like. The mail server may utilize facilities such as Active Server Pages (ASP), ActiveX, American National Standards Institute (ANSI) C++/C#, Microsoft .NET, Common Gateway Interface (CGI) scripts, Java, JavaScript, PERL, PHP, Python, WebObjects, etc. The mail server may utilize communication protocols such as Internet Message Access Protocol (IMAP), Messaging Application Programming Interface (MAPI), Microsoft Exchange, Post Office Protocol (POP), Simple Mail Transfer Protocol (SMTP), or the like. In some embodiments, the computer system **400** may implement a mail client stored program component. The mail client may be a mail viewing application, such as Apple Mail, Microsoft Entourage, Microsoft Outlook, Mozilla Thunderbird, etc.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include Random Access Memory (RAM), Read-Only Memory (ROM), volatile memory, non-volatile memory, hard drives, Compact Disc (CD) ROMs, Digital Video Disc (DVDs), flash drives, disks, and any other known physical storage media.

### Advantages of the embodiment of the present disclosure are illustrated herein.

The present disclosure provides a method and a system for generating a safe navigation path for navigating a vehicle.

The safe navigation path generated in the present disclosure is at centre of the road, thereby providing sufficient space for manoeuvring the vehicle, thereby overcoming the constraints related to vehicle length, vehicle width, turning radius and the like.

The safe navigation path generated in the present disclosure provides a smooth navigation for the vehicle by minimizing jerks while driving the vehicle.

A description of an embodiment with several components in communication with each other does not imply that all such components are required. On the contrary a variety of optional components are described to illustrate the wide variety of possible embodiments of the invention as defined by the appended claims.

When a single device or article is described herein, it will be apparent that more than one device/article (whether or not they cooperate) may be used in place of a single device/article. Similarly, where more than one device or article is described herein (whether or not they cooperate), it will be apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The specification has described a method and a system for generating a safe navigation path for navigating a vehicle. The illustrated steps are set out to explain the exemplary embodiments shown, and it should be anticipated that on-going technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed.

## Claims

1. A method for generating a safe navigation path (242) for navigating a vehicle (103), the method comprising:
receiving, by a path generation system (107) associated with the vehicle (103), a reference path (117) between a source point (115a) and a destination point (115b) from one or more sources (101), wherein the reference path (117) is confined between boundaries of a road characterised as a left-side boundary (119a) and a right-side boundary (119b);
determining, by the path generation system (107), a plurality of boundary points positioned along a boundary selected from the left-side boundary (119a) and the right-side boundary (119b) by traversing along the selected boundary, one boundary point at a given point of time, each boundary point being traversed being considered a proposed boundary point, wherein the selected boundary comprises a continuous accumulation of boundary points among which the plurality of boundary points are determined, wherein the determining of the plurality of boundary points includes the following steps (a)-(f):
(a) identifying a line segment (235a) between a first boundary point (234a) and a second boundary point (23) as a reference line segment, wherein the second boundary point is adjacent to the first boundary point;
(b) determining a line segment (235b) between the first boundary point (234a) and the proposed boundary point (234c) being processed:
(c) comparing the angle (236) between the identified reference line segment (235a) and the determined line segment (234b) between the first boundary point (234a) and the proposed boundary point (234c) being processed with a pre-defined segment inclination threshold;
(d) selecting a next boundary point (234d) as a next proposed boundary point to be processed if the angle (236) between the reference line segment (235a) and the determined line segment between the first boundary point (234a) and the proposed boundary point being processed (234c) is less than the pre-defined segment inclination threshold;
(e) reiterating steps (b)-(d) above until the angle (236) between the reference line segment (235a) and the determined line segment (234b) between the first boundary point (234a) and the proposed boundary point (234c) being processed exceeds the pre-defined segment inclination threshold; and
(f) generating a segment at the proposed boundary point (234c) being processed when the angle (236) between the reference line segment (235a) and the determined line segment between the first boundary point (234a) and the proposed boundary point being processed is greater than the pre-defined segment inclination threshold; and
identifying, by the path generation system (107), a tangent for each of a plurality of points along the selected boundary, wherein each point is positioned between an adjacent pair of determined boundary points from the determined plurality of boundary points, and wherein a line perpendicular to the tangent is projected from each point for each pair of the plurality of boundary points until the perpendicular line reaches the other unselected boundary;
identifying, by the path generation system (107), a centre point on each perpendicular line, wherein each centre point is connected to generate the safe navigation path (242), wherein the plurality of boundary points are determined based on generation of one or more segments by traversal of the selected boundary, wherein each segment from the one or more segments comprises a proposed boundary point which is detected to be a determined boundary point, when the segment complies with at least a pre-defined segment length threshold and a pre-defined segment inclination threshold .

2. The method as claimed in claim 1, wherein each boundary point traversed on the selected boundary is considered to be a proposed boundary point, until the proposed boundary point is detected to be a determined boundary point.

3. The method as claimed in any preceding claim, wherein the identified tangent is parallel to a line segment generated between the adjacent determined boundary points.

4. The method as claimed in any preceding claim, further comprising providing, by the path generation system (107), the generated safe navigation path (242) to a navigation module associated with the path generation system (107) for navigating the vehicle (103).

5. A path generation system (107) for generating a safe navigation path (242) for navigating a vehicle (103), the path generation system (107) comprising:
a processor (109); and
a memory (113) communicatively coupled to the processor (109), wherein the memory (113) stores the processor-executable instructions, which, on execution, causes the processor (109) to:
receive a reference path (117) between a source point (115a) and a destination point (115b) from one or more sources (101), wherein the reference path (117) is confined between boundaries of a road characterised as a left-side boundary (119a) and a right-side boundary (119b);
determining a plurality of boundary points positioned along a boundary selected from the left-side boundary (119a) and the right-side boundary (119b) by traversing along the selected boundary, one boundary point at a given point of time, each boundary point being traversed being considered a proposed boundary point, wherein the selected boundary comprises a continuous accumulation of boundary points among which the plurality of boundary points are determined, wherein the determining of the plurality of boundary points includes the following steps (a)-(f):
(a) identifying a line segment (235a) between a first boundary point (234a) and a second boundary point (23) as a reference line segment, wherein the second boundary point is adjacent to the first boundary point;
(b) determining a line segment (235b) between the first boundary point (234a) and the proposed boundary point (234c) being processed:
(c) comparing the angle (236) between the identified reference line segment (235a) and the determined line segment (234b) between the first boundary point (234a) and the proposed boundary point (234c) being processed with a pre-defined segment inclination threshold;
(d) selecting a next boundary point (234d) as a next proposed boundary point to be processed if the angle (236) between the reference line segment (235a) and the determined line segment between the first boundary point (234a) and the proposed boundary point being processed (234c) is less than the pre-defined segment inclination threshold;
(e) reiterating steps (b)-(d) above until the angle (236) between the reference line segment (235a) and the determined line segment (234b) between the first boundary point (234a) and the proposed boundary point (234c) being processed exceeds the pre-defined segment inclination threshold; and
(f) generating a segment at the proposed boundary point (234c) being processed when the angle (236) between the reference line segment (235a) and the determined line segment between the first boundary point (234a) and the proposed boundary point being processed is greater than the pre-defined segment inclination threshold; and
identify a tangent for each of a plurality of points along the selected boundary, wherein each point is positioned between an adjacent pair of determined boundary points from the determined plurality of boundary points, and wherein a line perpendicular to the tangent is projected from each point for each pair of the plurality of boundary points until the perpendicular line reaches the other unselected boundary; and
identify a centre point on each perpendicular line, wherein each centre point is connected to generate the safe navigation path (242), wherein the processor (109) determines the plurality of boundary points based on generation of one or more segments by traversal of the selected boundary, wherein each segment from the one or more segments comprises a proposed boundary point which is detected to be a determined boundary point, when the segment complies with at least a pre-defined segment length threshold and a pre-defined segment inclination threshold.

6. The path generation system (107) as claimed in claim 5, wherein the processor (109) considers each boundary point traversed on the selected boundary to be a proposed boundary point, until the proposed boundary point is detected to be a determined boundary.

7. The path generation system (107) as claimed in any of claims 5-6, wherein the identified tangent is parallel to a line segment generated between the adjacent determined boundary points.

8. The path generation system (107) as claimed in any of claims 5-7, wherein the processor (109) is further configured to provide the generated safe navigation path (242) to a navigation module associated with the path generation system (107) for navigating the vehicle (103).

9. A non-transitory computer readable medium including instructions stored thereon that when processed by at least one processor (109) causes a path generation system (107) to perform operations comprising:
receiving a reference path (117) between a source point (115a) and a destination point (115b) from one or more sources (101), wherein the reference path (117) is confined between boundaries of a road characterised as a left-side boundary (119a) and a right-side boundary (119b);
determining a plurality of boundary points positioned along a boundary selected from the left-side boundary (119a) and the right-side by traversing along the selected boundary, one boundary point at a given point of time, each boundary point being traversed being considered a proposed boundary point, wherein the selected boundary comprises a continuous accumulation of boundary points among which the plurality of boundary points are determined, wherein the determining of the plurality of boundary points includes the following steps (a)-(f):
(a) identifying a line segment (235a) between a first boundary point (234a) and a second boundary point (23) as a reference line segment, wherein the second boundary point is adjacent to the first boundary point;
(b) determining a line segment (235b) between the first boundary point (234a) and the proposed boundary point (234c) being processed:
(c) comparing the angle (236) between the identified reference line segment (235a) and the determined line segment (234b) between the first boundary point (234a) and the proposed boundary point (234c) being processed with a pre-defined segment inclination threshold;
(d) selecting a next boundary point (234d) as a next proposed boundary point to be processed if the angle (236) between the reference line segment (235a) and the determined line segment between the first boundary point (234a) and the proposed boundary point being processed (234c) is less than the pre-defined segment inclination threshold;
(e) reiterating steps (b)-(d) above until the angle (236) between the reference line segment (235a) and the determined line segment (234b) between the first boundary point (234a) and the proposed boundary point (234c) being processed exceeds the pre-defined segment inclination threshold; and
(f) generating a segment at the boundary point (234c) being processed when the angle (236) between the reference line segment (235a) and the determined line segment between the first boundary point (234a) and the proposed boundary point being processed is greater than the pre-defined segment inclination threshold; and
identifying a tangent for each of a plurality of points along the selected boundary, wherein each point is positioned between an adjacent pair of determined boundary points from the determined plurality of boundary points, and wherein a line perpendicular to the tangent is projected from each point for each pair of the plurality of boundary points until the perpendicular line reaches reaches the other unselected boundary; and
identifying a centre point on each perpendicular line, wherein each centre point is connected to generate the safe navigation path (242) wherein the plurality of boundary points are determined based on generation of one or more segments by traversal of the selected boundary, wherein each segment from the one or more segments comprises a proposed boundary point which is detected to be a determined boundary point, when the segment complies with at least a pre-defined segment length threshold and a pre-defined segment inclination threshold.

## Patentansprüche

1. Verfahren zur Erzeugung eines sicheren Navigationsweges (242) zum Navigieren eines Fahrzeugs (103), wobei das Verfahren Folgendes umfasst:
Empfangen, durch ein dem Fahrzeug (103) zugeordnetes Wegerzeugungssystem (107), eines Referenzweges (117) zwischen einem Ursprungspunkt (115a) und einem Zielpunkt (115b) aus einem oder mehreren Ursprüngen (101), wobei der Referenzweg (117) zwischen Grenzen einer Straße begrenzt ist, die als eine linke Grenze (119a) und eine rechte Grenze (119b) gekennzeichnet sind;
Bestimmen, durch das Wegerzeugungssystem (107), einer Vielzahl von Grenzpunkten, die entlang einer Grenze positioniert sind, die aus der linken Grenze (119a) und der rechten Grenze (119b) durch Durchlaufen entlang der ausgewählten Grenze ausgewählt ist, ein Grenzpunkt zu einem gegebenen Zeitpunkt, wobei jeder Grenzpunkt, der durchlaufen wird, als ein vorgeschlagener Grenzpunkt betrachtet wird, wobei die ausgewählte Grenze eine kontinuierliche Ansammlung von Grenzpunkten umfasst, unter denen die Vielzahl von Grenzpunkten bestimmt wird, wobei das Bestimmen der Vielzahl von Grenzpunkten die folgenden Schritte (a)-(f) beinhaltet:
(a) Ermitteln eines Liniensegments (235a) zwischen einem ersten Grenzpunkt (234a) und einem zweiten Grenzpunkt (23) als Referenzliniensegment, wobei der zweite Grenzpunkt benachbart zu dem ersten Grenzpunkt liegt;
(b) Bestimmen eines Liniensegments (235b) zwischen dem ersten Grenzpunkt (234a) und dem vorgeschlagenen Grenzpunkt (234c), der verarbeitet wird;
(c) Vergleichen des Winkels (236) zwischen dem ermittelten Referenzliniensegment (235a) und dem bestimmten Liniensegment (234b) zwischen dem ersten Grenzpunkt (234a) und dem vorgeschlagenen Grenzpunkt (234c), der verarbeitet wird, mit einem vordefinierten Segmentneigungsschwellenwert;
(d) Auswählen eines nächsten Grenzpunkts (234d) als nächsten vorgeschlagenen Grenzpunkt, der verarbeitet werden soll, wenn der Winkel (236) zwischen dem Referenzliniensegment (235a) und dem bestimmten Liniensegment zwischen dem ersten Grenzpunkt (234a) und dem vorgeschlagenen Grenzpunkt, der verarbeitet wird (234c), kleiner ist als der vordefinierte Segmentneigungsschwellenwert;
(e) Wiederholen der obigen Schritte (b)-(d), bis der Winkel (236) zwischen dem Referenzliniensegment (235a) und dem bestimmten Liniensegment (234b) zwischen dem ersten Grenzpunkt (234a) und dem vorgeschlagenen Grenzpunkt (234c), der verarbeitet wird, den vordefinierten Segmentneigungsschwellenwert überschreitet; und
(f) Erzeugen eines Segments an dem vorgeschlagenen Grenzpunkt (234c), der verarbeitet wird, wenn der Winkel (236) zwischen dem Referenzliniensegment (235a) und dem bestimmten Liniensegment zwischen dem ersten Grenzpunkt (234a) und dem vorgeschlagenen Grenzpunkt, der verarbeitet wird, größer ist als der vordefinierte Segmentneigungsschwellenwert; und
Ermitteln, durch das Wegerzeugungssystem (107), einer Tangente für jeden einer Vielzahl von Punkten entlang der ausgewählten Grenze, wobei jeder Punkt zwischen einem benachbarten Paar bestimmter Grenzpunkte aus der bestimmten Vielzahl von Grenzpunkten positioniert ist, und wobei von jedem Punkt für jedes Paar der Vielzahl von Grenzpunkten eine senkrecht zu der Tangente stehende Linie projiziert wird, bis die senkrechte Linie die andere nicht ausgewählte Grenze erreicht;
Ermitteln, durch das Wegerzeugungssystem (107), eines Mittelpunkts auf jeder senkrechten Linie, wobei jeder Mittelpunkt verbunden ist, um den sicheren Navigationsweg (242) zu erzeugen, wobei die Vielzahl von Grenzpunkten basierend auf der Erzeugung eines oder mehrerer Segmente durch Durchlaufen der ausgewählten Grenze bestimmt wird, wobei jedes Segment aus dem einem oder den mehreren Segmenten einen vorgeschlagenen Grenzpunkt umfasst, der als ein bestimmter Grenzpunkt erkannt wird, wenn das Segment mindestens einen vordefinierten Segmentlängenschwellenwert und einen vordefinierten Segmentneigungsschwellenwert einhält.

2. Verfahren nach Anspruch 1, wobei jeder auf der ausgewählten Grenze durchlaufene Grenzpunkt als ein vorgeschlagener Grenzpunkt betrachtet wird, bis der vorgeschlagene Grenzpunkt als ein bestimmter Grenzpunkt erkannt wird.

3. Verfahren nach einem der vorhergehenden Ansprüche, wobei die ermittelte Tangente parallel zu einem Liniensegment ist, das zwischen den benachbarten bestimmten Grenzpunkten erzeugt wird.

4. Verfahren nach einem der vorhergehenden Ansprüche, ferner umfassend das Bereitstellen, durch das Wegerzeugungssystem (107), des erzeugten sicheren Navigationsweges (242) für ein Navigationsmodul, das dem Wegerzeugungssystem (107) zugeordnet ist, zum Navigieren des Fahrzeugs (103).

5. Wegerzeugungssystem (107) zur Erzeugung eines sicheren Navigationsweges (242) zum Navigieren eines Fahrzeugs (103), wobei das Wegerzeugungssystem (107) Folgendes umfasst:
einen Prozessor (109); und
einen Speicher (113), der kommunikativ mit dem Prozessor (109) gekoppelt ist, wobei der Speicher (113) die Prozessor ausführbaren Anweisungen speichert, die bei Ausführung den Prozessor (109) veranlassen zum:
Empfangen eines Referenzweges (117) zwischen einem Ursprungspunkt (115a) und einem Zielpunkt (115b) aus einem oder mehreren Ursprüngen (101), wobei der Referenzweg (117) zwischen Grenzen einer Straße begrenzt ist, die als eine linke Grenze (119a) und eine rechte Grenze (119b) gekennzeichnet sind;
Bestimmen einer Vielzahl von Grenzpunkten, die entlang einer Grenze positioniert sind, die aus der linken Grenze (119a) und der rechten Grenze (119b) durch Durchlaufen entlang der ausgewählten Grenze ausgewählt ist, ein Grenzpunkt zu einem gegebenen Zeitpunkt, wobei jeder Grenzpunkt, der durchlaufen wird, als ein vorgeschlagener Grenzpunkt betrachtet wird, wobei die ausgewählte Grenze eine kontinuierliche Ansammlung von Grenzpunkten umfasst, unter denen die Vielzahl von Grenzpunkten bestimmt wird, wobei das Bestimmen der Vielzahl von Grenzpunkten die folgenden Schritte (a)-(f) beinhaltet:
(a) Ermitteln eines Liniensegments (235a) zwischen einem ersten Grenzpunkt (234a) und einem zweiten Grenzpunkt (23) als Referenzliniensegment, wobei der zweite Grenzpunkt benachbart zu dem ersten Grenzpunkt liegt;
(b) Bestimmen eines Liniensegments (235b) zwischen dem ersten Grenzpunkt (234a) und dem vorgeschlagenen Grenzpunkt (234c), der verarbeitet wird;
(c) Vergleichen des Winkels (236) zwischen dem ermittelten Referenzliniensegment (235a) und dem bestimmten Liniensegment (234b) zwischen dem ersten Grenzpunkt (234a) und dem vorgeschlagenen Grenzpunkt (234c), der verarbeitet wird, mit einem vordefinierten Segmentneigungsschwellenwert;
(d) Auswählen eines nächsten Grenzpunkts (234d) als nächsten vorgeschlagenen Grenzpunkt, der verarbeitet werden soll, wenn der Winkel (236) zwischen dem Referenzliniensegment (235a) und dem bestimmten Liniensegment zwischen dem ersten Grenzpunkt (234a) und dem vorgeschlagenen Grenzpunkt, der verarbeitet wird (234c), kleiner ist als der vordefinierte Segmentneigungsschwellenwert;
(e) Wiederholen der obigen Schritte (b)-(d), bis der Winkel (236) zwischen dem Referenzliniensegment (235a) und dem bestimmten Liniensegment (234b) zwischen dem ersten Grenzpunkt (234a) und dem vorgeschlagenen Grenzpunkt (234c), der verarbeitet wird, den vordefinierten Segmentneigungsschwellenwert überschreitet; und
(f) Erzeugen eines Segments an dem vorgeschlagenen Grenzpunkt (234c), der verarbeitet wird, wenn der Winkel (236) zwischen dem Referenzliniensegment (235a) und dem bestimmten Liniensegment zwischen dem ersten Grenzpunkt (234a) und dem vorgeschlagenen Grenzpunkt, der verarbeitet wird, größer ist als der vordefinierte Segmentneigungsschwellenwert; und
Ermitteln einer Tangente für jeden einer Vielzahl von Punkten entlang der ausgewählten Grenze, wobei jeder Punkt zwischen einem benachbarten Paar bestimmter Grenzpunkte aus der bestimmten Vielzahl von Grenzpunkten positioniert ist, und wobei von jedem Punkt für jedes Paar der Vielzahl von Grenzpunkten eine senkrecht zu der Tangente stehende Linie projiziert wird, bis die senkrechte Linie die andere nicht ausgewählte Grenze erreicht; und
Ermitteln eines Mittelpunkts auf jeder senkrechten Linie, wobei jeder Mittelpunkt verbunden ist, um den sicheren Navigationsweg (242) zu erzeugen, wobei der Prozessor (109) die Vielzahl von Grenzpunkten basierend auf der Erzeugung eines oder mehrerer Segmente durch Durchlaufen der ausgewählten Grenze bestimmt, wobei jedes Segment aus dem einem oder den mehreren Segmenten einen vorgeschlagenen Grenzpunkt umfasst, der als ein bestimmter Grenzpunkt erkannt wird, wenn das Segment mindestens einen vordefinierten Segmentlängenschwellenwert und einen vordefinierten Segmentneigungsschwellenwert einhält.

6. Wegerzeugungssystem (107) nach Anspruch 5, wobei der Prozessor (109) jeden auf der ausgewählten Grenze durchlaufenen Grenzpunkt als einen vorgeschlagenen Grenzpunkt betrachtet, bis der vorgeschlagene Grenzpunkt als eine bestimmte Grenze erkannt wird.

7. Wegerzeugungssystem (107) nach einem der Ansprüche 5 - 6, wobei die ermittelte Tangente parallel zu einem Liniensegment ist, das zwischen den benachbarten bestimmten Grenzpunkten erzeugt wird.

8. Wegerzeugungssystem (107) nach einem der Ansprüche 5 - 7, wobei der Prozessor (109) ferner dazu konfiguriert ist, den erzeugten sicheren Navigationsweg (242) für ein Navigationsmodul, das dem Wegerzeugungssystem (107) zugeordnet ist, zum Navigieren des Fahrzeugs (103) bereitzustellen.

9. Nichtflüchtiges computerlesbares Medium, beinhaltend darauf gespeicherte Anweisungen, die bei Verarbeitung durch mindestens einen Prozessor (109) bewirken, dass ein Wegerzeugungssystem (107) Operationen ausführt, die Folgendes umfassen:
Empfangen eines Referenzweges (117) zwischen einem Ursprungspunkt (115a) und einem Zielpunkt (115b) von einem oder mehreren Ursprüngen (101), wobei der Referenzweg (117) zwischen Grenzen einer Straße begrenzt ist, die als eine linke Grenze (119a) und eine rechte Grenze (119b) gekennzeichnet sind;
Bestimmen einer Vielzahl von Grenzpunkten, die entlang einer Grenze positioniert sind, die aus der linken Grenze (119a) und der rechten durch Durchlaufen entlang der ausgewählten Grenze ausgewählt ist, ein Grenzpunkt zu einem gegebenen Zeitpunkt, wobei jeder Grenzpunkt, der durchlaufen wird, als ein vorgeschlagener Grenzpunkt betrachtet wird, wobei die ausgewählte Grenze eine kontinuierliche Ansammlung von Grenzpunkten umfasst, unter denen die Vielzahl von Grenzpunkten bestimmt wird, wobei das Bestimmen der Vielzahl von Grenzpunkten die folgenden Schritte (a)-(f) beinhaltet:
(a) Ermitteln eines Liniensegments (235a) zwischen einem ersten Grenzpunkt (234a) und einem zweiten Grenzpunkt (23) als Referenzliniensegment, wobei der zweite Grenzpunkt benachbart zu dem ersten Grenzpunkt liegt;
(b) Bestimmen eines Liniensegments (235b) zwischen dem ersten Grenzpunkt (234a) und dem vorgeschlagenen Grenzpunkt (234c), der verarbeitet wird;
(c) Vergleichen des Winkels (236) zwischen dem ermittelten Referenzliniensegment (235a) und dem bestimmten Liniensegment (234b) zwischen dem ersten Grenzpunkt (234a) und dem vorgeschlagenen Grenzpunkt (234c), der verarbeitet wird, mit einem vordefinierten Segmentneigungsschwellenwert;
(d) Auswählen eines nächsten Grenzpunkts (234d) als nächsten vorgeschlagenen Grenzpunkt, der verarbeitet werden soll, wenn der Winkel (236) zwischen dem Referenzliniensegment (235a) und dem bestimmten Liniensegment zwischen dem ersten Grenzpunkt (234a) und dem vorgeschlagenen Grenzpunkt, der verarbeitet wird (234c), kleiner ist als der vordefinierte Segmentneigungsschwellenwert;
(e) Wiederholen der obigen Schritte (b)-(d), bis der Winkel (236) zwischen dem Referenzliniensegment (235a) und dem bestimmten Liniensegment (234b) zwischen dem ersten Grenzpunkt (234a) und dem vorgeschlagenen Grenzpunkt (234c), der verarbeitet wird, den vordefinierten Segmentneigungsschwellenwert überschreitet; und
(f) Erzeugen eines Segments an dem Grenzpunkt (234c), der verarbeitet wird, wenn der Winkel (236) zwischen dem Referenzliniensegment (235a) und dem bestimmten Liniensegment zwischen dem ersten Grenzpunkt (234a) und dem vorgeschlagenen Grenzpunkt, der verarbeitet wird, größer ist als der vordefinierte Segmentneigungsschwellenwert; und
Ermitteln einer Tangente für jeden einer Vielzahl von Punkten entlang der ausgewählten Grenze, wobei jeder Punkt zwischen einem benachbarten Paar bestimmter Grenzpunkte aus der bestimmten Vielzahl von Grenzpunkten positioniert ist, und wobei von jedem Punkt für jedes Paar der Vielzahl von Grenzpunkten eine senkrecht zu der Tangente stehende Linie projiziert wird, bis die senkrechte Linie die andere nicht ausgewählte Grenze erreicht; und
Ermitteln eines Mittelpunkts auf jeder senkrechten Linie, wobei jeder Mittelpunkt verbunden ist, um den sicheren Navigationsweg (242) zu erzeugen, wobei die Vielzahl von Grenzpunkten basierend auf der Erzeugung eines oder mehrerer Segmente durch Durchlaufen der ausgewählten Grenze bestimmt wird, wobei jedes Segment aus dem einem oder den mehreren Segmenten einen vorgeschlagenen Grenzpunkt umfasst, der als ein bestimmter Grenzpunkt erkannt wird, wenn das Segment mindestens einen vordefinierten Segmentlängenschwellenwert und einen vordefinierten Segmentneigungsschwellenwert einhält.

## Revendications

1. Procédé pour générer un trajet de navigation sans danger (242) pour la navigation d'un véhicule (103), le procédé comprenant :
la réception, par un système de génération de trajet (107) associé au véhicule (103), d'un trajet de référence (117) entre un point source (115a) et un point de destination (115b) depuis une ou plusieurs sources (101), dans lequel le trajet de référence (117) est confiné entre les limites d'une route caractérisées comme une limite côté gauche (119a) et une limite côté droit (119b) ;
la détermination, par le système de génération de trajet (107), d'une pluralité de points de limite positionnés le long d'une limite sélectionnée parmi la limite côté gauche (119a) et la limite côté droit (119b) en traversant le long de la limite sélectionnée, un point de limite à un instant donné, chaque point de limite étant traversé étant considéré comme un point de limite proposé, dans lequel la limite sélectionnée comprend une accumulation continue de points de limite parmi lesquels la pluralité de points de limite sont déterminés, dans lequel la détermination de la pluralité de points de limite comprend les étapes (a) à (f) suivantes :
(a) identification d'un segment de ligne (235a) entre un premier point de limite (234a) et un deuxième point de limite (23) en tant que segment de ligne de référence, dans lequel le deuxième point de limite est adjacent au premier point de limite ;
(b) détermination d'un segment de ligne (235b) entre le premier point de limite (234a) et le point de limite proposé (234c) en cours de traitement :
(c) comparaison de l'angle (236) entre le segment de ligne de référence identifié (235a) et le segment de ligne déterminé (234b) entre le premier point de limite (234a) et le point de limite proposé (234c) en cours de traitement à un seuil d'inclinaison de segment prédéfini ;
(d) sélection d'un point de limite suivant (234d) comme point de limite suivant proposé à traiter si l'angle (236) entre le segment de ligne de référence (235a) et le segment de ligne déterminé entre le premier point de limite (234a) et le point de limite proposé en cours de traitement (234c) est inférieur au seuil d'inclinaison de segment prédéfini ;
(e) réitération des étapes (b) à (d) ci-dessus jusqu'à ce que l'angle (236) entre le segment de ligne de référence (235a) et le segment de ligne déterminé (234b) entre le premier point de limite (234a) et le point de limite proposé (234c) en cours de traitement dépasse le seuil d'inclinaison de segment prédéfini ; et
(f) génération d'un segment au niveau du point de limite proposé (234c) en cours de traitement lorsque l'angle (236) entre le segment de ligne de référence (235a) et le segment de ligne déterminé entre le premier point de limite (234a) et le point de limite proposé en cours de traitement est supérieur au seuil d'inclinaison de segment prédéfini ;
et
l'identification, par le système de génération de trajet (107), d'une tangente pour chacun d'une pluralité de points le long de la limite sélectionnée, dans lequel chaque point est positionné entre une paire adjacente de points de limite déterminés parmi la pluralité déterminée de points limites, et dans lequel une ligne perpendiculaire à la tangente est projetée à partir de chaque point pour chaque paire de la pluralité de points de limite jusqu'à ce que la ligne perpendiculaire atteigne l'autre limite non sélectionnée ;
l'identification, par le système de génération de trajet (107), d'un point central sur chaque ligne perpendiculaire, dans lequel chaque point central est connecté pour générer le trajet de navigation sans danger (242), dans lequel la pluralité de points de limite sont déterminés sur la base de la génération d'un ou plusieurs segments par traversée de la limite sélectionnée, dans lequel chaque segment parmi l'un ou plusieurs segments comprend un point de limite proposé qui est détecté comme étant un point de limite déterminé, lorsque le segment respecte au moins un seuil de longueur de segment prédéfini et un seuil d'inclinaison de segment prédéfini.

2. Procédé selon la revendication 1, dans lequel chaque point de limite traversé sur la limite sélectionnée est considéré comme étant un point de limite proposé, jusqu'à ce que le point de limite proposé soit détecté comme étant un point de limite déterminé.

3. Procédé selon l'une quelconque des revendications précédentes, dans lequel la tangente identifiée est parallèle à un segment de ligne généré entre les points de limite déterminés adjacents.

4. Procédé selon l'une quelconque des revendications précédentes, comprenant en outre la fourniture, par le système de génération de trajet (107), du trajet de navigation sans danger généré (242) à un module de navigation associé au système de génération de trajet (107) pour la navigation du véhicule (103).

5. Système de génération de trajet (107) pour générer un trajet de navigation sans danger (242) pour la navigation d'un véhicule (103), le système de génération de trajet (107) comprenant :
un processeur (109) ; et
une mémoire (113) couplée en communication au processeur (109), dans lequel la mémoire (113) stocke les instructions exécutables par processeur, qui, lorsqu'elles sont exécutées, amènent le processeur (109) à :
recevoir un trajet de référence (117) entre un point source (115a) et un point de destination (115b) depuis une ou plusieurs sources (101), dans lequel le trajet de référence (117) est confiné entre les limites d'une route caractérisées comme une limite côté gauche (119a) et une limite côté droit (119b) ;
déterminer une pluralité de points de limite positionnés le long d'une limite sélectionnée parmi la limite côté gauche (119a) et la limite côté droit (119b) en traversant le long de la limite sélectionnée, un point de limite à un instant donné, chaque point de limite étant traversé étant considéré comme un point de limite proposé, dans lequel la limite sélectionnée comprend une accumulation continue de points de limite parmi lesquels la pluralité de points de limite sont déterminés,
dans lequel la détermination de la pluralité de points de limite comprend les étapes (a) à (f) suivantes :
(a) identification d'un segment de ligne (235a) entre un premier point de limite (234a) et un deuxième point de limite (23) en tant que segment de ligne de référence, dans lequel le deuxième point de limite est adjacent au premier point de limite ;
(b) détermination d'un segment de ligne (235b) entre le premier point de limite (234a) et le point de limite proposé (234c) en cours de traitement :
(c) comparaison de l'angle (236) entre le segment de ligne de référence identifié (235a) et le segment de ligne déterminé (234b) entre le premier point de limite (234a) et le point de limite proposé (234c) en cours de traitement à un seuil d'inclinaison de segment prédéfini ;
(d) sélection d'un point de limite suivant (234d) comme point de limite suivant proposé à traiter si l'angle (236) entre le segment de ligne de référence (235a) et le segment de ligne déterminé entre le premier point de limite (234a) et le point de limite proposé en cours de traitement (234c) est inférieur au seuil d'inclinaison de segment prédéfini ;
(e) réitération des étapes (b) à (d) ci-dessus jusqu'à ce que l'angle (236) entre le segment de ligne de référence (235a) et le segment de ligne déterminé (234b) entre le premier point de limite (234a) et le point de limite proposé (234c) en cours de traitement dépasse le seuil d'inclinaison de segment prédéfini ; et
(f) génération d'un segment au niveau du point de limite proposé (234c) en cours de traitement lorsque l'angle (236) entre le segment de ligne de référence (235a) et le segment de ligne déterminé entre le premier point de limite (234a) et le point de limite proposé en cours de traitement est supérieur au seuil d'inclinaison de segment prédéfini ; et
identifier une tangente pour chacun d'une pluralité de points le long de la limite sélectionnée, dans lequel chaque point est positionné entre une paire adjacente de points de limite déterminés parmi la pluralité déterminée de points de limite, et dans lequel une ligne perpendiculaire à la tangente est projetée à partir de chaque point pour chaque paire de la pluralité de points de limite jusqu'à ce que la ligne perpendiculaire atteigne l'autre limite non sélectionnée ; et
identifier un point central sur chaque ligne perpendiculaire, dans lequel chaque point central est connecté pour générer le trajet de navigation sans danger (242), dans lequel le processeur (109) détermine la pluralité de points de limite sur la base de la génération d'un ou plusieurs segments par traversée de la limite sélectionnée, dans lequel chaque segment parmi l'un ou plusieurs segments comprend un point de limite proposé qui est détecté comme étant un point de limite déterminé, lorsque le segment respecte au moins un seuil de longueur de segment prédéfini et un seuil d'inclinaison de segment prédéfini.

6. Système de génération de trajet (107) selon la revendication 5, dans lequel le processeur (109) considère chaque point de limite traversé sur la limite sélectionnée comme étant un point de limite proposé, jusqu'à ce que le point de limite proposé soit détecté comme étant une limite déterminée.

7. Système de génération de trajet (107) selon l'une quelconque des revendications 5 à 6, dans lequel la tangente identifiée est parallèle à un segment de ligne généré entre les points de limite déterminés adjacents.

8. Système de génération de trajet (107) selon l'une quelconque des revendications 5 à 7, dans lequel le processeur (109) est en outre configuré pour fournir le trajet de navigation sans danger généré (242) à un module de navigation associé au système de génération de trajet (107) pour la navigation du véhicule (103).

9. Support lisible par ordinateur non transitoire comprenant des instructions stockées sur celui-ci qui, lorsqu'elles sont traitées par au moins un processeur (109), amènent un système de génération de trajet (107) à effectuer des opérations comprenant :
la réception d'un trajet de référence (117) entre un point source (115a) et un point de destination (115b) depuis une ou plusieurs sources (101), dans lequel le trajet de référence (117) est confiné entre les limites d'une route caractérisée comme étant une limite côté gauche (119a) et une limite côté droit (119b) ;
la détermination d'une pluralité de points de limite positionnés le long d'une limite sélectionnée parmi la limite côté gauche (119a) et le côté droit en traversant le long de la limite sélectionnée, un point de limite à un instant donné, chaque point de limite étant traversé étant considéré comme un point de limite proposé, dans lequel la limite sélectionnée comprend une accumulation continue de points de limite parmi lesquels la pluralité de points de limite sont déterminés, dans lequel la détermination de la pluralité de points de limite comprend les étapes (a) à (f) suivantes :
(a) identification d'un segment de ligne (23 5a) entre un premier point de limite (234a) et un deuxième point de limite (23) en tant que segment de ligne de référence, dans lequel le deuxième point de limite est adjacent au premier point de limite ;
(b) détermination d'un segment de ligne (235b) entre le premier point de limite (234a) et le point de limite proposé (234c) en cours de traitement :
(c) comparaison de l'angle (236) entre le segment de ligne de référence identifié (235a) et le segment de ligne déterminé (234b) entre le premier point de limite (234a) et le point de limite proposé (234c) en cours de traitement à un seuil d'inclinaison de segment prédéfini ;
(d) sélection d'un point de limite suivant (234d) comme point de limite suivant proposé à traiter si l'angle (236) entre le segment de ligne de référence (235a) et le segment de ligne déterminé entre le premier point de limite (234a) et le point de limite proposé en cours de traitement (234c) est inférieur au seuil d'inclinaison de segment prédéfini ;
(e) réitération des étapes (b) à (d) ci-dessus jusqu'à ce que l'angle (236) entre le segment de ligne de référence (235a) et le segment de ligne déterminé (234b) entre le premier point de limite (234a) et le point de limite proposé (234c) en cours de traitement dépasse le seuil d'inclinaison de segment prédéfini ; et
(f) génération d'un segment au niveau du point limite (234c) en cours de traitement lorsque l'angle (236) entre le segment de ligne de référence (235a) et le segment de ligne déterminé entre le premier point de limite (234a) et le point de limite proposé en cours de traitement est supérieur au seuil d'inclinaison de segment prédéfini ; et
l'identification d'une tangente pour chacun d'une pluralité de points le long de la limite sélectionnée, dans lequel chaque point est positionné entre une paire adjacente de points de limite déterminés parmi la pluralité déterminée de points de limite, et dans lequel une ligne perpendiculaire à la tangente est projetée à partir de chaque point pour chaque paire de la pluralité de points de limite jusqu'à ce que la ligne perpendiculaire atteigne l'autre limite non sélectionnée ; et
l'identification d'un point central sur chaque ligne perpendiculaire, dans lequel chaque point central est connecté pour générer le trajet de navigation sans danger (242), dans lequel la pluralité de points de limite sont déterminés sur la base de la génération d'un ou plusieurs segments par traversée de la limite sélectionnée, dans lequel chaque segment parmi l'un ou plusieurs segments, comprend un point de limite proposé qui est détecté comme étant un point de limite déterminé, lorsque le segment respecte au moins un seuil de longueur de segment prédéfini et un seuil d'inclinaison de segment prédéfini.
